Europäisches Patentamt

European Patent Office

Office européen des brevets

(19)

(11) **EP 0 587 868 B1**

(12) # EUROPEAN PATENT SPECIFICATION

(45) Date of publication and mention
of the grant of the patent:
**06.05.1999 Bulletin 1999/18**

(21) Application number: **93908885.2**

(22) Date of filing: **31.03.1993**

(51) Int Cl.$^6$: **C12G 1/02**, C12H 1/14

(86) International application number:
**PCT/EP93/00809**

(87) International publication number:
**WO 93/20181 (14.10.1993 Gazette 1993/25)**

(54) **METHOD FOR IMPROVING THE AROMA AND/OR THE FLAVOR OF WINE USING NOBLE GASES**

VERFAHREN ZUR VERBESSERUNG DES AROMAS UND/ODER DES GESCHMACKS VON WEIN MIT EDELGASEN

PROCEDE CONCERNANT L'AMELIORATION DES PROPRIETES ORGANOLEPTIQUES D'UN VIN GRACE A L'UTILISATION DE GAZ NOBLES

(84) Designated Contracting States:
**DE ES FR IT**

(30) Priority: **03.04.1992 US 863167**
**27.11.1992 US 982496**

(43) Date of publication of application:
**23.03.1994 Bulletin 1994/12**

(73) Proprietor: **L'AIR LIQUIDE, SOCIETE ANONYME POUR**
**L'ETUDE ET L'EXPLOITATION DES PROCEDES GEORGES CLAUDE**
**75321 Paris Cédex 07 (FR)**

(72) Inventor: **SPENCER, Kevin, C.**
**Hinsdale, IL 60521 (US)**

(74) Representative: **Vesin, Jacques**
**L'Air Liquide,**
**Service Propriété Intellectuelle,**
**75 Quai d'Orsay**
**75321 Paris Cedex 07 (FR)**

(56) References cited:
**EP-A- 0 516 549**      **FR-A- 519 834**
**GB-A- 1 274 195**      **GB-A- 1 408 995**
**US-A- 4 475 576**

**Description**

BACKGROUND OF THE INVENTION

Field of the Invention:

The present invention relates to a method for improving the aroma and/or the flavor of a wine using noble gases.

Description of the Background:

The ability of the noble gases helium (He), neon (Ne), argon (Ar), krypton (Kr), xenon (Xe) and radon (Ra) to enter into chemical combination with other atoms is extremely limited. Generally, only krypton, xenon and radon have been induced to react with other atoms, which are highly reactive such as fluorine and oxygen, and the compounds thus formed are explosively unstable. See Advanced Inorganic Chemistry, by F.A. Cotton and G. Wilkinson (Wiley, Third Edition). However, while the noble gases are, in general, chemically inert, xenon is known to exhibit certain physiological effects, such as anesthesia. Other physiological effects have also been observed with other inert gases such as nitrogen, which, for example, is known to cause narcosis when used under great pressure in deep-sea diving.
It has been reported in U.S. 3,183,171 to Schreiner that argon and other inert gases can influence the growth rate of fungi and argon is known to improve the preservation of fish or seafood. U.S. 4,946,326 to Schvester, JP 52105232, JP 80002271 and JP 77027699. However, the fundamental lack of understanding of these observations clearly renders such results difficult, if not impossible, to interpret. Moreover, the meaning of such observations is further obscured by the fact that mixtures of many gases, including oxygen, were used in these studies. Further, some of these studies were conducted at hyperbaric pressures and at freezing temperatures. At such high pressures, it is likely that the observed results were caused by pressure damage to cellular components and to the enzymes themselves.
For example, from 1964 to 1966, Schreiner documented the physiological effects of inert gases particularly as related to anesthetic effects and in studies relating to the development of suitable containment atmospheres for deep-sea diving, submarines and spacecraft. The results of this study are summarized in three reports, each entitled: "Technical Report. The Physiological Effects of Argon, Helium and the Rare Gases," prepared for the Office of Naval Research, Department of the Navy. Contract Nonr 4115(00), NR: 102-597. Three later summaries and abstracts of this study were published.
One abstract, "Inert Gas Interactions and Effects on Enzymatically Active Proteins," Fed. Proc. 26:650 (1967), restates the observation that the noble and other inert gases produce physiological effects at elevated partial pressures in intact animals (narcosis) and in microbial and mammalian cell systems (growth inhibition).
A second abstract, "A Possible Molecular Mechanism for the Biological Activity of Chemically Inert Gases," In: Intern. Congr. Physiol. Sci., 23rd, Tokyo, restates the observation that the inert gases exhibit biological activity at various levels of cellular organization at high pressures.
Also, a summary of the general biological effects of the noble gases was published by Schreiner in which the principal results of his earlier research are restated. "General Biological Effects of the Helium-Xenon Series of Elements, " Fed. Proc. 27:872-878 (1968).
However, in 1969, Behnke et al refuted the major conclusions of Schreiner. Behnke et al concluded that the effects reported earlier by Schreiner are irreproducible and result solely from hydrostatic pressure, i.e., that no effects of noble gases upon enzymes are demonstrable. "Enzyme-Catalyzed Reactions as Influenced by Inert Gases at High Pressures." J. Food Sci. 34:370-375.
In essence, the studies of Schreiner were based upon the hypothesis that chemically inert gases compete with oxygen molecules for cellular sites and that oxygen displacement depends upon the ratio of oxygen to inert gas concentrations. This hypothesis was never demonstrated as the greatest observed effects (only inhibitory effects were observed) were observed with nitrous oxide and found to be independent of oxygen partial pressure. Moreover, the inhibition observed was only 1.9% inhibition per atmosphere of added nitrous oxide.
In order to refute the earlier work of Schreiner, Behnke et al independently tested the effect of high hydrostatic pressures upon enzymes, and attempted to reproduce the results obtained by Schreiner. Behnke et al found that increasing gas pressure of nitrogen or argon beyond that necessary to observe a slight inhibition of chymotrypsin, invertase and tyrosinase caused no further increase in inhibition, in direct contrast to the finding of Schreiner.
The findings of Behnke et al can be explained by simple initial hydrostatic inhibition, which is released upon stabilization of pressure. Clearly, the findings cannot be explained by the chemical-$O_2$/inert gas interdependence as proposed by Schreiner. Behnke et al concluded that high pressure inert gases inhibit tyrosinase in non-fluid (i.e., gelatin) systems by decreasing oxygen availability, rather than by physically altering the enzyme. This conclusion is in direct contrast to the findings of Schreiner.

In addition to the refutation by Behnke et al, the results reported by Schreiner are difficult, if not impossible, to interpret for other reasons as well.

First, all analyses were performed at very high pressure, and were not controlled for hydrostatic pressure effects.

Second, in many instances, no significant differences were observed between the various noble gases, nor between the noble gases and nitrogen.

Third, knowledge of enzyme mode of action and inhibition was very poor at the time of these studies, as were the purities of enzymes used. It is impossible to be certain that confounding enzyme activities were not present or that measurements were made with a degree of resolution sufficient to rank different gases as to effectiveness. Further, any specific mode of action could only be set forth as an untestable hypothesis.

Fourth, solubility differences between the various gases were not controlled, nor considered in the result.

Fifth, all tests were conducted using high pressures of inert gases superimposed upon 100 kPa (1 atmosphere) of air, thus providing inadequate control of oxygen tension.

Sixth, all gas effects reported are only inhibitions.

Seventh, not all of the procedures in the work have been fully described, and may not have been experimentally controlled. Further, long delays after initiation of the enzyme reaction precluded following the entire course of reaction, with resultant loss of the highest readable rates of change.

Eighth, the reported data ranges have high variability based upon a small number of observations, thus precluding significance.

Ninth, the levels of inhibition observed are very small even at high pressures.

Tenth, studies reporting a dependence upon enzyme concentration do not report significant usable figures.

Eleventh, all reports of inhibitory potential of inert gases at low pressures, i.e., <200 kPa (<2 atm.), are postulated based upon extrapolated lines from high pressure measurements, not actual data.

Finally, it is worthy of reiterating that the results of Behnke et al clearly contradict those reported by Schreiner in several crucial respects, mainly that high pressure effects are small and that hydrostatic effects, which were not controlled by Schreiner, are the primary cause of the incorrect conclusions made in those studies.

Additionally, although it was reported by Sandhoff et al., FEBS Letters, vol. 62, no. 3 (March, 1976) that xenon, nitrous oxide and halothane enhance the activity of particulate sialidase, these results are questionable due to the highly impure enzymes used in this study and are probably due to inhibitory oxidases in the particles.

To summarize the above patents and publications and to mention others related thereto, the following is noted.

Behnke et al (1969), disclose that enzyme-catalyzed reactions are influenced by inert gases at high pressures. J. Food Sci. 34: 370-375.

Schreiner et al (1967), describe inert gas interactions and effects on enzymatically, active proteins. Abstract No. 2209. Fed. Proc. 26:650.

Schreiner, H. R. 1964, Technical Report, describes the physiological effects of argon, helium and the rare gases. Contract Nonr 4115 (00), NR: 102-597. Office of Naval Research, Washington, D.C.

Schreiner, H.R. 1965, Technical Report, describes the physiological effects of argon, helium and the rare gases. Contract Nonr 4115 (00), NR: 102-597. Office of Naval Research, Washington, D.C.

Schreiner, H.R. 1966, Technical Report, describes the physiological effects of argon, helium and the rare gases. Contract Nonr 4115 (00), NR: 102-597. Office of Naval Research, Washington, D.C.

Doebbler, G.F. et al, Fed. Proc. Vol. 26, p. 650 (1967) describes the effect of pressure or of reduced oxygen tension upon several different enzymes using the gases Kr, Xe, $SF_6$, $N_2O$, He, Ne, Ar, and $N_2$. All gases were considered equal in their effect.

Colten et al, Undersea Biomed Res. 17(4), 297-304 (1990) describes the combined effect of helium and oxygen with high pressure upon the enzyme glutamate decarboxylase. Notably, only the hyperbaric inhibitory effect of both helium and oxygen and the chemical inhibitory effect of oxygen was noted.

Nevertheless, at present, it is known that enzyme activities can be inhibited in several ways. For example, many enzymes can be inhibited by specific poisons that may be structurally related to their normal substrates. Alternatively, many different reagents are known to be specific inactivators of target enzymes. These reagents generally cause chemical modification at the active site of the enzyme to induce loss of catalytic activity, active-site-directed irreversible inactivation or affinity labeling. See Enzymatic Reaction Mechanisms by C. Walsh (W. H. Freeman & Co., 1979). Alternatively, certain multi-enzyme sequences are known to be regulated by particular enzymes known as regulatory or allosteric enzymes. See Bioenergetics, by A.L. Leninger (Benjamin/Cummings Publishing Co., 1973).

However, it would be extremely advantageous if a much simpler approach could be attained for regulating enzyme activities in a predictable and controllable manner.

Wine has been produced and consumed by various civilizations for at least 5,000 years. From antiquity, wine has held a distinguished place in human society. According to one legend, the mythical King Icarius was taught the secrets of the vine by Dionysus on the condition that they not be divulged to anyone else. In his supposed mischievousness, Dionysus must have understood that King Icarius would be as incapable as other mortals of containing his gregariousness and knowledge of the vine. See The Wines of Greece, Miles Lambert-Gócs (Faber and Faber).

Wine generally contains acids, sugars, salts and phenolic substances as well as alcohols, esters, aldehydes, acetals, hydrocarbons, terpenes and sulfur-containing compounds, for example, which have odors that vary both in intensity and in appeal. Great wine is characterized by a plenitude, a power and finesse of taste and color, and a flavor that is both intense and alluring. See The Taste of Wine by Emile Peynand (The Wine Appreciation Guild). Thus, in commercial interest, the beauty and value of any wine is very much a result of its own unique assemblage of flavor and fragrant chemicals, an assemblage which can be known in detail in a dissection of its parts, but whose combination of parts into a whole is the presently unknowable definition of the character of wine.

Oxidation is a major factor in the alteration of wine during storage, and largely contributes to its loss of quality. Exposure of wine to air results in the deterioration of its aroma and taste due to oxidation. Color can also be affected due to oxidative browning. Cloudiness may also develop.

Autoxidation of wines is a complex phenomenon, which is believed to be a chain reaction starting with the oxidation of wine phenolic compounds, for example anthocyanins, catechines, and tannins. Hydrogen peroxide may be produced which may then oxidize ethanol to acetaldehyde. Acetaldehyde promotes the copolymerization of anthocyanins with phenolic compounds, which in turn, provokes a darkening of the wine. Therefore, at present, it is considered that oxidation of wine causes an increase in acetaldehyde, due to autoxidation of ethanol, followed by a decrease in acetaldehyde, due to combinations with other wine chemical compounds.

It has also been demonstrated that oxidation promotes the formation of aldehydes and esters. These compounds have low flavor thresholds and, therefore, affect the aroma even when present at low levels in the wine. Formation of acetaldehyde from ethanol largely contributes to the increasing amount of aldehydes in oxidized wines. Acetaldehyde levels in wines can be determined by the AOAC titration method, or by headspace gas chromatography. The latter method is the method of choice for analyzing the condition of wines in terms of flavors, fragrances, quality, and oxidation.

As many as 800 compounds have been reported as constituents of the wine aroma. For example, a headspace chromatogram of chardonnay wine, with identification by mass spectrometry, was provided by Noble et al., J. Agric. Food Chem., 28, 346-353, 1980. Further, an example of a headspace chromatogram of a red wine, with identification by mass spectrometry, is given by Bertuccioli and Viani, J. Fd. Agric., 27, 1035-1038, 1976. Another example of headspace chromatogram of a 16-year old Champagne, with identification by mass spectrometry, is given by Loyaux et al., J. Sci. Food Agric., 32, 1254-1258, 1981. An example of headspace chromatogram of an unoxidized Riesling wine is given by Simpson, Vitis, 17, 274-287, 1978.

Headspace analysis of wine by gas chromatography shows that oxidation of wine results in an overall increase of aroma volatiles, i.e. new compounds are formed and concentrations of compounds that were initially present in the wine increase. For example, the major chemical changes caused by oxidation in Riesling wine are increased amounts of ethyl n-hexanoate, 1-hexanol/ethyl lactate, acetic acid, ethyl n-octanoate/furfural, benzaldehyde, vitispirane, ethyl furoate, diethyl succinate, a-terpineol, 1,1,6-trimethyl-1,2-dihydronaphthalene (TDN), and 2-phenethanol. Carotenoids present in wine are the precursors to vitispirane and TDN. Flavor evaluation of oxidized wines results in lower scores than that of the unoxidized control wine. Developing aromas described as "burnt", "cooked", and "aldehydic" are considered to be typical of oxidized spoiled wine. Benzaldehyde is one of the compounds responsible for these deteriorative aromas.

oxidation of wine also causes an increase of optical densities in the visible region, i.e., 400, 420, 500, 600, and 700 nm. That is, oxidized wine turns a brown color. It is, therefore, possible to monitor oxidation of wines by ultraviolet/visible spectrophotometry.

Polyphenol oxidase, one of the endogenous grape enzymes, catalyzes the oxidation of wine phenolic compounds, such as catechins and procyanidins, resulting in the browning of wine. Enzymatic oxidative reactions are thus also important in oxidation of wine.

The oxidation of wines causes a loss of quality characterized by changes in color characteristics measurable by UV/VIS spectrophotometry, and in aroma volatiles measurable by GC/MS spectrometry. These changes may be caused by the activity of various oxidases in enzymatic reactions, or by chemical reactions driven by autoxidative natural product oxygen donors or externally by atmospheric oxygen. The latter reaction has generally been considered most important, and is currently controlled by use of inert or non-reactive gases to displace oxygen. However, some of these gases, such as nitride oxide and carbon dioxide, contribute to an off taste and degrade the wine. Nitrogen is the gas used presently most often in industrial applications, and is only used to purge the atmosphere (e.g. air) present above the wine stored in a container, i.e. inert this space.

GB 1331533 discloses a method of improving the keeping properties of alcoholic beverages produced by fermentation. In the presence of oxygen, material changes occur in the beverages which greatly impair their technological and taste properties, it is thus suggested to prevent access of oxygen to the beverage. It is therefore recommended that the different steps of the process take place in an inert gas atmosphere, e.g. that the empty space remaining in storage vessels after filling it with a beverage should also be filled with inert gas. To maintain the adequate pressure in the storage vessels, nitrogen, argon or other rare gases are suggested to be used in the space above the alcoholic beverage.

The results of the tests carried out on beer clearly indicated to the artisan that the invention consists of first evacuating the container or the bottle, filling said container or bottle with nitrogen, then pouring the beer in the container or the bottle. If the beer is poured first in a container full of air and the space above the liquid is flushed with a gas, which is either air or nitrogen, whether or not the bottles are prepressurized with air or nitrogen, similar results are obtained, i.e. no substantial difference between air and nitrogen. It is suggested by those examples that any container and bottle be flushed with nitrogen gas before filling with beer and that they be evacuated before flushing with nitrogen.

JP published patent application JP-A-3-058778 discloses a method for storing and maturing liquors and more particularly a method for preventing deterioration of liquors during storage and maturation by using argon gas as the headspace gas for the container of liquors. While nitrogen is described as being inadequate for use in the same conditions, it is recommended to purge the headspace above the container with argon and maintain the connection with the argon gas cylinder to maintain a pressure above the liquid. No difference is seen regarding the acidity of a wine stored during three months under air or argon, while the $OD^{430}_{3.0}$ absorbance remains 10% lower with argon than without argon. It is specifically stated in this patent that the reason for the difference between $N_2$ and Ar is that the $N_2$ used contained oxygen, whereas the Ar did not.

ES 85/00634 (ES 523358) teaches a vinification process without use of preservatives, wherein all the steps of the process are carried out in sterile equipment and sterile gas, said gas being selected among carbon dioxide, nitrogen, or the rare gases. Contrary to the previous citations, carbon dioxide, nitrogen and rare gases are suggested to have the same effect, the bottle being sterilized and filled up with one of the above gases in a sterile state.

SU 825619 discloses a process to store wine in a container under an inert gas atmosphere, wherein the container has a pump and an inert gas is injected above the wine level. Here also, carbon dioxide is suggested to be the right gas to flush the container before pouring the wine.

Thus, the conventional wisdom in the art is that removal of oxygen from the atmosphere in contact with the wine stored in a container or a bottle is desirable and that this may be done by displacing oxygen with an inert gas. Typically, it has been suggested to use carbon dioxide and nitrogen. It has been occasionally suggested to use rare gases (in general) as possible equivalents to nitrogen, due to the inert character they are supposed to have, which should be similar in behavior to nitrogen.

When used according the circumstances described above, the above inert gases might have some beneficial effect in avoiding or delaying the contact of a wine stored in a container with the oxygen contained in air, and then avoiding or delaying oxidation of this wine by contact of its surface with ambient air, no process has ever been found which substantially avoids or delays any type of chemical oxidation reaction which occurs not only at the top surface of the wine, in contact with air, but also within the body of the wine during its storage.

## SUMMARY OF THE INVENTION

Accordingly, it is an object of the present invention to provide a method of improving the aroma and/or the flavor of wine by direct chemical control.

It is, in particular, an object of the present invention to provide a method of improving the aroma and/or the flavor of a wine using certain noble gases.

It is a further object of the invention to avoid color degradation of the wine and/or to improve the shelf life of said wine.

The above objects and others which will become more apparent in view of the following disclosure are provided by a method of improving the aromas and/or the flavor of a wine or precursor constituents thereof, entailing injecting a gas or a gas mixture into the wine or precursor thereof in containing means and/or into the containing means, the gas or gas mixture containing an element selected from the group consisting of argon, krypton, xenon and neon and a mixture thereof; substantially saturating the wine or precursor or containing means with the gas or gas mixture; maintaining the saturation substantially throughout the volume of the containing means and during substantially all the time that said wine is stored in the containing means.

It has been surprisingly discovered that if instead of solely blanketing the headspace above a wine or precursor thereof stored in a tank or a bottle with any kind of inert gas, a gas selected from the group consisting of argon, krypton, xenon and neon or a mixture thereof is sparged into the wine and/or injected above the wine in order to saturate or substantially saturate said wine with said gas or gas mixture, it is possible to substantially improve the color and/or the flavor and/or the aroma and/or the shelf life of said wine or precursor, particularly when said saturation or substantial saturation is maintained throughout the volume of the storage container and during substantially all the time that the wine is stored in said container.

The term "substantially saturate" means that it is not necessary to completely and/or constantly saturate the wine with said gas or gas mixture (i.e., having the maximum amount of gas solubilized in said wine). Usually, it is considered necessary to saturate said wine to more than 50% of its (full) saturation level and preferably more than 70%, while 80% or more is considered the most adequate level of saturation of the wine. Of course, supersaturation is also possible. This means that if during the storage life of the wine in the container, the wine is not saturated with noble gas at least from time to time or even quite longer if it remains generally substantially saturated, results according to the invention are usually obtained. While it is believed that it is important that the entire volume of the container be saturated or substantially saturated with one of the above gas or a mixture thereof, it is quite possible to obtain the results according to the invention if a part of the volume is not saturated during preferably a limited period of time or is less saturated or substantially saturated than other portions of the volume of the wine in the container.

While at least one of the above gases must be present in order to obtain the benefits of the invention, the gases can be diluted with some other gases, in order to ensure, for example, that the present invention is economically advantageous and valuable. The diluent gases are preferably nitrogen, oxygen, nitrous oxide, air, helium or carbon dioxide. In case of an oxygen-containing gas or another reactive gas such as carbon dioxide, the degradative properties thereof are such that these properties will mask the effect of noble gases, certainly in mixtures where they comprise 50% vol. or more and possibly 30% vol. or more. When those mixes comprise 0% to 10% vol. of these other gases, the noble gases referred to above are still extremely effective, while between 10% vol. and 20% vol. they are usually still effective, depending on the type of gases and conditions, which might be easily determined by the man skilled in the art.

In case of nitrogen and/or helium gas, the effect of noble gases consisting of Ar, Ne, Kr, Xe in the mixture is linearly proportional to its concentration in the mixture, which evidences that nitrogen and/or helium have no effect on substantially preventing oxidation of wine. The mixture of noble gas and nitrogen and/or helium can thus comprise any amount (% volume) of nitrogen and/or helium: however, in practice, the lesser the proportion of noble gas selected from the group consisting of Ar, Ne, Kr and Xe, the larger the time required to achieve saturation or substantial saturation of the wine.

Among the active gases (Ar, Kr, Xe, and Ne), it is preferred to use argon because it is cheaper than the other active gases. However, mixtures of argon and/or krypton and/or xenon are at least as effective as argon alone. It has also been unexpectedly found that mixtures comprising between 90 to 99% vol. argon and 1 to 10% Xe and/or Kr are usually the most effective as exemplified in the further examples (whether or not they are diluted with nitrogen, helium, or nitrous oxide). The difference in effect between the active gases defined hereabove and nitrogen have been also evidenced by the fact that mixtures of argon and oxygen or carbon dioxide have a similar (while decreased) effect than argon alone, while nitrogen mixed with oxygen or carbon dioxide evidenced no protective or preservative effect compared to oxygen or carbon dioxide alone.

It is also known from GB 1408995 to dissolve an inert gas in a beverage before it leaves the production plant by injecting the beverage into an inert gas within the container in which the beverage is to be transported from the production plant.

It is believed that the saturation or substantial saturation of the wine is an essential feature of the invention and that no one in the prior art has ever disclosed nor suggested said feature.

Generally speaking, Xe is the most efficient gas according to the invention, followed by Kr, Ar and Ne. Among the suitable mixes, either pure or diluted with $N_2$, He, $N_2$ (or even air, oxygen or a small amount of hydrogen) are the Ne/He mix comprising about 50% vol. of each, and the Kr/Xe mix comprising about 5-10% vol. Xe and about 90-95% vol. Kr, with a small amount of argon and/or oxygen (less than 2% vol.) or nitrogen (less than 1% vol.).

The temperatures at which the invention is carried out is usually between about 0°C to 60°C, and preferably about 10°C and 30°C.

The injection of the gas or gas mixture into the wine and/or into the container, e.g. by sparging is usually done at about 100 kPa (1 atmosphere) but is still quite operable at 200 or 300 kPa (2 or 3 atmospheres), while saturation is increased at higher pressures. The pressure of the gas above the wine in the container shall be, in any case, preferably lower than 1000 kPa (10 atmospheres) and it is usually acceptable to maintain it lower than 300 kPa (3 atmospheres). A slight overpressure (between 100 or 200 kPa (1 or 2 atmospheres) is usually sufficient when the wine is not a sparkling wine.

Saturation or substantial saturation of the wine can be measured by various methods well-known by the man skilled in the art, including but not limited to thermogravimetric analysis or mass change weighting.

There are a variety of standard methods available for the detection, qualitative and quantitative measurement of gases, and several are especially well suited for the determination of degree of saturation of noble gases into liquid samples.

Samples generally are completely evacuated as a control for zero % saturation. Such samples may then be completely saturated by contact with noble gases such that no additional noble gas will disappear from a reservoir in contact with the sample. Such saturated samples may then have their gas content driven off by trapped evacuation or by increase in temperature, and said gas sample identified quantitatively and qualitatively. Analysis is of trapped gases, reservoir gases, or some other headspace of gases, not directly of the sample.

Direct sample analysis methods are available, and include comprehensive GC/MS analysis, or by mass or thermal conductance or GC analysis and comparison with calibrated standards.

The simplest method is GC/MS (gas chromatography/mass spectrometry), which directly determines gas compositions. By preparing a standard absorption curve into a given sample for a series of gases and mixtures, one can accurately determine the degree of saturation at any point in time.

GC/MS is applied to the gas itself, as in the headspace above a sample. The technique may be used either to determine the composition and quantity of gas or mixture being released from a sample, or conversely the composition and quantity of a gas or mixture being absorbed by a sample by following the disappearance of the gas.

Appropriate GC/MS methods include, for example, the use of a 5 Angstrom porous layer open tubular molecular sieve capillary glass column of 0.32 mm diameter and 25 meter length to achieve separation, isothermally e. g. at 75°C or with any of several temperature ramping programs optimized for a given gas or mixture e.g. from 35-250°C, wherein ultra-high purity helium or hydrogen carrier gas is used at e.g. 1.0 cc/min flow rate, and gases are detected based upon their ionicity and quantitative presence in the sample, and characterized by their unique mass spectra.

Appropriate experimental conditions might include, for example, completely evacuating a given sample under vacuum to remove all absorbed and dissolved gases, then adding a gas or mixture to the sample and measuring a) the rate of uptake of each component as disappearance from the added gas, and/or b) the final composition of the gas headspace after equilibration. Both measurements are made by GC/MS, and either method can be used in both batch and continuous modes of operation.

A simplification of this analysis entails the use of a GC only, with a thermal conductivity detector, wherein adequate knowledge of the gas saturation process and preparation of calibration curves have been made such that quantification and characterization of gases and mixtures can be accomplished without mass spectral analysis. Such instruments are relatively inexpensive and portable.

A further simplification would depend solely upon measurement of the mass change in the sample upon uptake of various gases or mixtures, which depends upon the use of standard curves or absorption data available from the literature.

An alternate method for such mass measurements is thermogravimetric analysis, which is highly precise, wherein a sample is saturated with gas and mass changes are correlated to thermal change.

Generally as used herein, by "containing means" is meant any type of container such as a bottle of any particular size, tanks, fermentation vats or barrels, for example. Of course, the containing means may be made of any type of material, such as glass, stainless steel, wood or even cement.

Further, as used herein, the term "precursor" means any product leading up to the final product wine. For example, the precursor may be free-run juice recently freed from the grape skins, i.e. must, either before or after clarification, press juice obtained from pomace (grape solids), fermenting juice, or even bottled wine during racking.

## BRIEF DESCRIPTION OF THE DRAWINGS

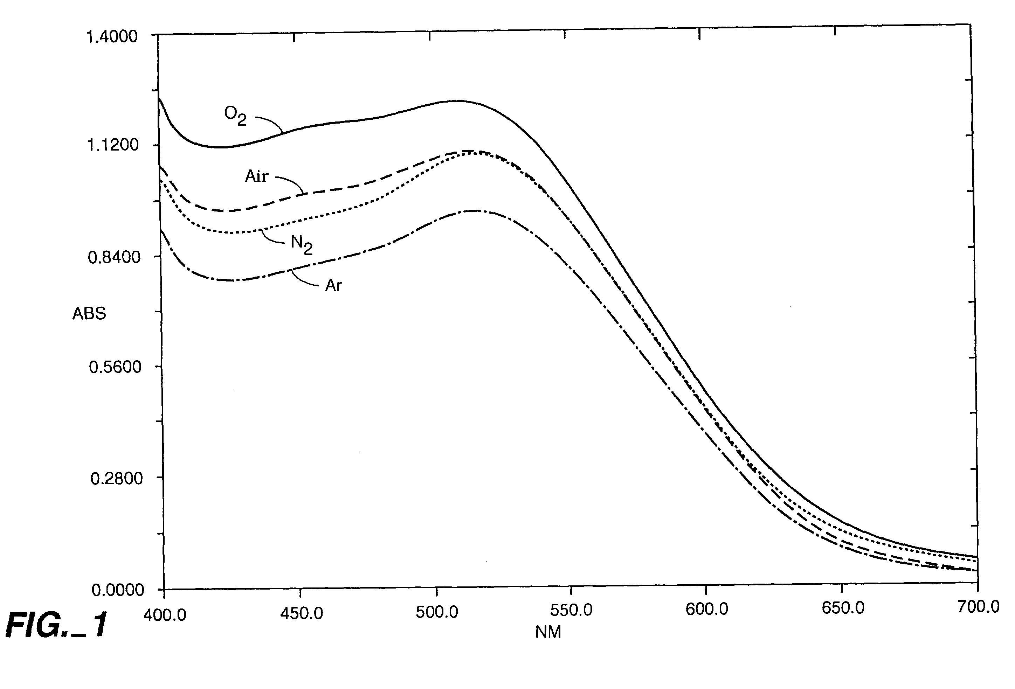

Figure 1 represents UV/VIS analysis of Lafite Rothschild Pauillac after 30 days of storage at room temperature under $O_2$, Air, $N_2$ or Ar.. The improvement of argon vs nitrogen in preventing oxidative color change (loss of red rich color) is indicated.

## DETAILED DESCRIPTION OF THE PREFERRED EMBODIMENTS

In accordance with the present invention, it has been surprisingly discovered that the aroma and flavor of wine may be surprisingly improved by contacting until substantial saturation at least a portion of the same with a noble gas, mixture of noble gases or mixture containing at least one noble gas.

Generally, it has now been discovered that oxidation of wine is strongly accelerated by the presence of oxygen or air, correlated in a direct way with the concentration of oxygen. It has also now been discovered that displacement of this oxygen by vacuum, or by sparging with the nitrogen, or by superimposition of a nitrogen atmosphere retards the oxidation process. However, these treatments retard only that portion of the entire oxidation process attributable to atmospheric oxygen.

In accordance with the present invention, it has been discovered that sparging or superimposition of an atmosphere of a noble gas, mixture of noble gases or mixture containing at least one noble gas inhibits the oxidation surprisingly better than nitrogen or any other gas, and that this inhibition is far beyond that expected for increased solubility of the gas. Further, it has been discovered that these gases inhibited oxidation caused by atmospheric oxygen, by dissolved oxygen, by enzymatic action of oxidases, and by autoxidative processes.

By virtue of the present invention, it has, in particular, been found that wines stored under a noble gas, mixture of noble gases or mixture containing at least one noble gas have shelf-life, color, aroma, fragrance and flavor characteristics surprisingly superior to those stored under nitrogen. For example, shelf-life may be extended dramatically, such as by at least 30%. Further, by treating older wines with noble gases, it is possible to preserve the same from cascade oxidation. Further, preparing or serving wine under such gases confers superior quality characteristics.

Generally, the present invention may be used with advantage in any stage of wine production and storage. For a summary of the various stages of wine production, see Wines and Vineyards of France by Larousse (Arcade-Little, Brown and Company, 1987). For example, the present invention may be applied during any or all of these stages, such as during desteming, crushing, mixing of free-run wine with press wine or during pasteurization and/or during storage with the gases of the present invention being applied to the bottles prior to corking at the domain or chateaux or after the bottles have been opened for subsequent storage.

Generally, in accordance with the present invention, by contacting wine with a gas mixture containing any of the present noble gases, mixtures of noble gases or mixtures containing at least one noble gas effective displacement of oxygen is obtained and, in addition, both autoxidation and enzymatic oxidation is surprisingly inhibited.

In accordance with the present invention, any noble gas, mixture of noble gases or mixture containing at least one noble gas may be used either in gaseous form or injected from liquid form into the system of interest with facile conversion into the gaseous form.

Generally, as used herein the term "noble gases" means argon, xenon, neon and krypton. Radon is not suitable because it is radioactive. Helium may be used as a carrier or as a diluent gas and has the same effect as nitrogen. Surprisingly however, helium has shown no effect similar to argon, krypton, xenon, or neon but truly has an effect of an inert gas.

Further, a variety of carrier gases may be used with the noble gases defined above. For example, gases such as oxygen, carbon dioxide, nitrogen or nitrous oxide may be used.

Generally, in accordance with the present invention, the noble gases are effective in the following order:

$$Xe > Kr > Ar > Ne$$

Furthermore, it is noted that the effect of the present invention functions well in the presence of sulfites, and may even be used to replace sulfites.

As noted above, the gases of the present invention may be used to advantage during any stage of wine production and/or storage. Further, the present invention may be practiced with conventional equipment, but using the present gases instead of conventional gas.

Substantially, any relative mix of the noble gases may be used. For example, each gas may be used from an amount greater than is found in normal atmospheric air to 100 volume %. Generally, an amount of noble gas or noble gas mixture of at least 10% by volume is used, more preferably about 50% by volume. As exemplified hereunder, more than 80% by volume of noble gas or noble gas mixture (and preferable more than 90% volume) is preferred (diluted in a carrier gas) for obtaining the most effective results.

Having described the present invention generally, reference will now be made to certain examples which are provided solely for purposes of illustration and are not intended to be imitative.

Examples

A series of experiments were carried out wherein a 25 ml sample of wine was placed in a vial containing 100 ml additional of test gas, the transfer being completed without the sample contacting any other gas. The gases tested included O2, Air, N2, N20, Ar, Xe, Kr, Ne, He, H2, CO2, and decile binary and ternary combinations of these. Additional experiments were carried out identical to this, but with addition of various amounts of oxygen (0%, 2%, 3%, 5%, 10%, 15%, 20%, 25%, 50%, 75%, 80%, 90%, 95%) to the atmosphere each vial. Additionally, tests were conducted with sparging of O2 to saturation prior to testing, aging under various levels of O2, and different temperature (0, 4, 10, 15, 20, 25, 30, 35, 45, 60 deg C) and pressure (near vacuum to 1000 kPa (10 atm) regimes.

Several wines were tested, including Cabernet Sauvignon USA, Chardonnay USA, Bordeaux FR, Champagne FR, Chardonnay FR, Sauvignon Blanc USA, Meursault FR, Reisling Germany, ranging in age from new (< 1 yr old) to much older wines (> 40 years old).

Gas chromatography coupled with mass spectrometry (GC/MS) was conducted on the headspace on untreated samples and on treated samples at weekly intervals up to 2 years. Good separation and identification comparable to literature references was obtained.

Ultraviolet/visible scanning spectrophotometry was also conducted to monitor changes in color and turbidity, and these were related directly to precise measures of oxidation.

It was specifically found that for 1988 Lafite Rothschild Paulliac, 1979 Haut Brion Graves, 1989 Kendall-Jackson USA Chardonnay, 1990 Acacia Carneros USA Chardonnay, 1990 Heitz USA Cabernet Sauvignon, and 1983 Perrier-Jouet Brut Champagne, that formation of aldehydes and esters typical of oxidation was retarded by 30% in the first weeks or after exposure to oxygen, to a maximum of 90%, and cumulative improvement representing retardations of greater than 90% were seen after 2 years. Particularly, the oxidation of ethanol to acetaldehyde as calculated from concentration ratios was so retarded. Further, the oxidation of phenolics and pigments (especially anthocyanins) was very much inhibited (up to 90% in two years, or by an exponential of about 10-30 % inhibition of the onset of the cascade effect).

Thus, the present invention provides a method of stabilizing or preserving wine during one or more stages of production.

The present invention also provides a method of preserving stored wines both before and after bottles thereof have been opened.

Furthermore, the present invention provides storage means containing gases in accordance with the present invention which may be used to preserve or maintain opened bottles of wine.

Figure 1 illustrates UV/VIS analysis of Lafite Rothschild after 30 days storage at room temperature under $O_2$, air, $N_2$ or Ar. Clearly, Ar exhibits a surprisingly superior ability (relative even to $N_2$) to prevent oxidative color change (loss of red rich color). The improvement shown is about 10% (Ar rel. to $N_2$).

However, as the present invention is used for longer periods of time, the advantageous effect thereof becomes more pronounced. For example, after a storage period of about 2 years, an improvement of about 35% is obtained. Thus, the present invention may be used for short storage periods of days, 1 week or 1 month, however, it is advantageously used for long periods of storage, such as 6 months, 1-10 years and even in excess of 10 years, such as for example 20, 50 or even 100 years.

Also, some chromatographic analysis of Lafite Rothschild Pauillac (1988) have shown oxidation of certain volatile components of the wine, depending on the kind of gas used to saturate or partially saturate the wine. Oxygen, nitrogen and argon have been used.

Clearly, from the various peaks of this GC/MS analysis regarding volatile compounds important to wine flavor, a progressive improvement is observed in inhibiting oxidation for: $O_2 < N_2 <$ Ar.

Table I and Table II show respectively the effect of different gas storage atmospheres (Table I) and the effect of gas mixtures in different proportions (Table II) on a wine which has been saturated with the various mixes exemplified in the tables. Saturation was substantially 100% and the measurements were carried out after 12 months of storage under usual temperature and pressure conditions to store those wines.

Table I

| Wine Evaluation Effect of different gas storage atmospheres | | | |
|---|---|---|---|
| Gas Mixes | Color | Flavor Aroma | Shelf Life (degree of Oxidation) |
| $N_2$ | 70 | 50 | 50 |
| Ar | 95 | 90 | 90 |
| Ar:Kr 9:1 | 97 | 95 | 95 |
| Ar:Ne 9:1 | 94 | 90 | 90 |
| Ar:Xe 9:1 | 100 | 99 | 99 |
| Ar:Xe 99:1 | 100 | 100 | 100 |
| He | 70 | 50 | 50 |
| Ne | 94 | 50 | 50 |
| Kr | 97 | 97 | 97 |
| Xe | 100 | 100 | 100 |
| | | | |
| Air | 15 | 10 | 10 |
| $O_2$ | 0 | 0 | 0 |
| $N_2:O_2$ 9:1 | 20 | 15 | 15 |
| Ar:$O_2$ 9:1 | 75 | 60 | 60 |

Table I (continued)

| Wine Evaluation Effect of different gas storage atmospheres | | | |
|---|---|---|---|
| Gas Mixes | Color | Flavor Aroma | Shelf Life (degree of Oxidation) |
| | | | |
| $CO_2$ | 25 | 50 | 50 |
| $N_2:CO_2$ 8:2 | 30 | 50 | 50 |
| Ar:$CO_2$ 8:2 | 40 | 60 | 60 |
| Relative scaling of effect compared to oxygen, set to 0. | | | |

In the comparison of nitrogen vs. argon, it is clear that argon offers superior control of oxidation and preserves the product better. Xenon and krypton offer greater effect than argon, whereas neon may, and helium does not work. Mixtures of noble gases even at very low levels as exemplified with AR:Xe 99:1 give better results than argon alone. In the comparison of oxygen and air with Ar+$O_2$ and $N_2$, it is clear that argon offers preservative effect even in the presence of oxygen or carbon dioxide whereas nitrogen does not.

Table II

| Wine Gas Mixtures in decile combination trials, as: | | | |
|---|---|---|---|
| Gas Mixtures | Color | Flavor Aroma | Shelf Life (degree of Oxidation) |
| Ar:Kr | | | |
| 100:0 | 95 | 95 | 95 |
| 80:20 | 97 | 97 | 97 |
| 60:40 | 94 | 94 | 94 |
| 50:50 | 95 | 95 | 95 |
| Ar:Kr:Xe | | | |
| 80:10:10 | 100 | 100 | 100 |
| 60:20:20 | 100 | 100 | 100 |
| 60:30:10 | 100 | 100 | 100 |
| Ar:$N_2$ | | | |
| 100:0 | 95 | 95 | 95 |
| 80:20 | 90 | 90 | 90 |
| 50:50 | 80 | 80 | 80 |
| 20:80 | 70 | 70 | 70 |
| Ar:He | | | |
| 100:0 | 95 | 95 | 95 |
| 80:20 | 90 | 90 | 90 |
| 50:50 | 80 | 80 | 80 |
| 20:80 | 70 | 60 | 60 |
| $N_2:O_2$ | | | |
| 100:0 | 70 | 50 | 50 |
| 90:10 | 20 | 15 | 15 |
| 80:20 | 15 | 10 | 10 |
| 70:30 | 0 | 0 | 0 |

Table II   (continued)

| Wine Gas Mixtures in decile combination trials, as: | | | |
|---|---|---|---|
| Gas Mixtures | Color | Flavor Aroma | Shelf Life (degree of Oxidation) |
| Ar:O$_2$ | | | |
| 100:0 | 95 | 95 | 95 |
| 90:10 | 75 | 60 | 60 |
| 80:20 | 70 | 50 | 50 |
| 70:30 | 75 | 1 | 40 |
| He:O$_2$ | | | |
| 100:0 | 70 | 50 | 50 |
| 90:10 | 20 | 15 | 15 |
| 80:20 | 15 | 10 | 10 |
| 70:30 | 0 | 0 | 0 |
| Relative scaling of effect compared to oxygen, set to 0. | | | |

In the above two tables, the color of the wine has been measured by UV/VIS spectrophotometer method, flavor and aroma by GC/MS method and shelf life by GC/MS method and calculation of the relative progress of oxidation over time compared with air or oxygen or nitrogen storage.

An organoleptic/sensory panel of five person have tested through blind samples the color, flavor and aroma which confirm the above sophisticated measurements.

Thus, the present invention may be used not only to preserve, maintain and/or improve the aroma and/or flavor of wine, but also to preserve, maintain or improve certain important flavoring compounds of wine. Thus, any single compound or combination of compounds found in wine may be preserved or maintained in accordance with the present invention.

Moreover, this applies to pre-fermented juice as well as to wine, itself, after fermentation. Thus, the present invention may be used to advantage in preserving or maintaining wine precursor (i.e., pre-fermentative) constituents.

Further, the present invention may be applied to any red or white wine regardless of origin in any stage of production and/or storage. Further, the present invention is advantageously used in conjunction with the production of wine from any grape varietal or blend of varientals. See Vines, Graces and Wines by J. Robinson (Knopf, 1986). The present invention may also be used in conjunction with wine produced from Botrytis afflicted grapes, such as Sauternes.

Further, it is understood that the present invention may be applied for the entire period of wine storage or only for a portion of the storage period so as to effect the maturation of the wine.

Also, it is understood that the present invention may otherwise be practiced in conjunction with conventional wine making equipment and using conventional wine making methodologies which are known to those in the art.

## Claims

1.   A method of improving the aromas and/or the flavor of a wine or precursor constituents thereof, comprising injecting a gas or gas mixture into said wine or precursor or both in containing means, the gas or gas mixture comprising an element selected from the group consisting of argon, krypton, xenon and neon and any mixture thereof, saturating to more than 50% volume of its full saturation level the wine or precursor with the gas mixture, maintaining the saturation substantially throughout the volume of the containing means and during substantially all the time that the wine or precursor is stored in said containing means.

2.   The method according to Claim 1, wherein said gas is injected in gaseous form and/or liquid form.

3.   The method according to claim 1 or 2, wherein said wine is saturated to more than 50% volume of its full saturation level.

4.   The method according to Claim 1 or 2, wherein said wine is saturated to more than 70% volume of its full saturation level.

5. The method according to Claim 1 or 2, wherein said wine is saturated to more than 80% volume of its full saturation level.

6. The method according to one of Claims 1 to 5, wherein said gas mixture additionally comprises a gas selected from the group comprising nitrogen, oxygen, nitrous oxide, air, helium, carbon dioxide or mixtures thereof.

7. The method according to Claim 6 comprising less than 50% volume of oxygen, carbon dioxide, or a mixture thereof.

8. The method according to Claim 6 comprising less than 30% volume of oxygen, carbon dioxide, or a mixture thereof.

9. The method according to Claim 6 comprising less than 20% volume of oxygen, carbon dioxide, or a mixture thereof.

10. The method according to Claim 6 comprising less than 10% volume of oxygen, carbon dioxide, or a mixture thereof.

11. The method according to one of Claims 1 to 10, wherein the gas mixture or the element of the gas mixture comprises 90% to 99% volume argon and 1% to 10% volume Xe and/or Kr.

12. The method according to one of Claims 1 to 11, wherein the gas mixture or the element of the gas mixture comprises about 50% volume Ne and 50% volume He.

13. The method according to one of Claims 1 to 12, wherein the gas mixture or the element of the gas mixture comprise about 5% to 10% volume Xe and 90% to 95% volume Kr.

14. The method according to Claim 13, wherein the gas mixture comprises less than 2% volume or argon, oxygen, nitrogen, or a mixture thereof.

15. The method according to one of Claims 1 to 14, wherein the temperature is comprised between 0°C and 40C.

16. The method according to one of Claims 1 to 15, wherein the temperature is comprised between 10°C and 30°C.

17. The method according to one of Claims 1 to 16, wherein the pressure of the wine or precursor is less than 1000 kPa (10 atmospheres).

18. The method according to one of Claims 1 to 17, wherein the pressure of the wine or precursor is less than 300 kPa (3 atmospheres).

19. The method according to one of Claims 1 to 17, wherein the pressure of the wine or precursor is between 100 and 200 kPa (1 and 2 atmospheres).

20. The method according to one of Claims 1 to 19, wherein the pressure of the wine or precursor is about 100 kPa (1 atmosphere).

**Patentansprüche**

1. Verfahren zur Verbesserung des Aromas und/oder des Geschmacks eines Weines oder dessen Vorstufenbestandteilen, umfassend das Injizieren eines Gases oder eines Gasgemisches in den Wein oder die Vorstufe oder beides, in einem Behälter, wobei das Gas oder das Gasgemisch ein Element aus der Gruppe bestehend aus Argon, Krypton, Xenon und Neon und jeglichem Gemisch davon enthält, das Sättigen des Weins oder der Vorstufe mit dem Gasgemisch zu mehr als 50 Vol.-% seines vollständigen Sättigungsniveaus, Aufrechterhalten der Sättigung im wesentlichen über das gesamte Volumen des Behälters und im wesentlichen während der gesamten Zeit, in der der Wein oder die Vorstufe in diesem Behälter gelagert wird.

2. Verfahren nach Anspruch 1, wobei das Gas in gasförmiger und/oder flüssiger Form injiziert wird.

3. Verfahren nach Anspruch 1 oder 2, wobei der Wein zu mehr als 50 Vol.-% seines vollständigen Sättigungsniveaus gesättigt wird.

4. Verfahren nach Anspruch 1 oder 2, worin der Wein zu mehr als 70 Vol.-% seines vollständigen Sättigungsniveaus gesättigt wird.

5. Verfahren nach Anspruch 1 oder 2, wobei der Wein zu mehr als 80 Vol.-% seines vollständigen Sättigungsniveaus gesättigt wird.

6. Verfahren nach einem der Ansprüche 1 bis 5, wobei die Gasmischung zusätzlich ein Gas ausgewählt aus der Gruppe enthaltend Stickstoff, Sauerstoff, Stickoxid, Luft, Helium, Kohlendioxid oder deren Gemischen enthält.

7. Verfahren nach Anspruch 6, umfassend weniger als 50 Vol.-% an Sauerstoff, Kohlendioxid oder einem Gemisch davon.

8. Verfahren nach Anspruch 6, umfassend weniger als 30 Vol.-% an Sauerstoff, Kohlendioxid oder einem Gemisch davon.

9. Verfahren nach Anspruch 6, umfassend weniger als 20 Vol.-% an Sauerstoff, Kohlendioxid oder einem Gemisch davon.

10. Verfahren nach Anspruch 6, umfassend weniger als 10 Vol.-% Sauerstoff, Kohlendioxid oder einem Gemisch davon.

11. Verfahren nach einem der Ansprüche 1 bis 10, wobei das Gasgemisch oder das Element des Gasgemisches 90 bis 99 Vol.-% Argon und 1 bis 10 Vol.-% Xe und/oder Kr enthält.

12. Verfahren nach einem der Ansprüche 1 bis 11, wobei das Gasgemisch oder das Element des Gasgemisches etwa 50 Vol.-% Ne und 50 Vol.-% He enthält.

13. Verfahren nach einem der Ansprüche 1 bis 12, wobei das Gasgemisch oder das Element des Gasgemisches etwa 5 bis 10 Vol.-% Xe und 90 bis 95 Vol.-% Kr enthält.

14. Verfahren nach Anspruch 13, wobei das Gasgemisch weniger als 2 Vol.-% Argon, Sauerstoff, Stickstoffoder eines Gemischs davon enthält.

15. Verfahren nach einem der Ansprüche 1 bis 14, wobei die Temperatur sich zwischen 0 °C und 40 °C befindet.

16. Verfahren nach einem der Ansprüche 1 bis 15, wobei die Temperatur sich zwischen 10°C und 30 °C befindet.

17. Verfahren nach einem der Ansprüche 1 bis 16, wobei der Druck des Weins oder der Vorstufe weniger als 1.000 kPa (10 Atmosphären) beträgt.

18. Verfahren nach einem der Ansprüche 1 bis 17, wobei der Druck des Weins oder der Vorstufe weniger als 300 kPa (3 Atmosphären) beträgt.

19. Verfahren nach einem der Ansprüche 1 bis 17, wobei der Druck des Weines oder der Vorstufe zwischen 100 und 200 kPa (1 und 2 Atmosphären) beträgt.

20. Verfahren nach einem der Ansprüche 1 bis 19, wobei der Druck des Weines oder der Vorstufe etwa 100 kPa (1 Atmosphäre) beträgt.

**Revendications**

1. Méthode d'amélioration de l'arôme et/ou de la saveur d'un vin ou de ses constituants précurseurs, consistant à injecter un gaz ou un mélange gazeux dans ledit vin ou précurseur ou les deux dans un moyen de confinement, le gaz ou mélange gazeux comprenant un élément choisi parmi le groupe constitué de l'argon, du krypton, du xénon et du néon et de tout mélange de ceux-ci, saturer le vin ou le précurseur avec le mélange gazeux jusqu'à plus de 50% en volume de son niveau de saturation total, maintenir la saturation essentiellement sur la totalité du volume du moyen de confinement et durant essentiellement la totalité de la période durant laquelle le vin ou le précurseur est stocké dans ledit moyen de confinement.

2. Méthode selon la revendication 1, dans laquelle ledit gaz est injecté sous forme gazeuse et/ou sous forme liquide.

3. Méthode selon la revendication 1 ou 2, dans laquelle ledit vin est saturé jusqu'à plus de 50% en volume de son niveau de saturation total.

4. Méthode selon la revendication 1 ou 2, dans laquelle ledit vin est saturé jusqu'à plus de 70% en volume de son niveau de saturation total.

5. Méthode selon la revendication 1 ou 2, dans laquelle ledit vin est saturé jusqu'à plus de 80% en volume de son niveau de saturation total.

6. Méthode selon l'une des revendications 1 à 5, dans laquelle ledit mélange gazeux comprend en outre un gaz choisi parmi le groupe comprenant l'azote, l'oxygène, l'oxyde nitreux, l'air, l'hélium, le dioxyde de carbone ou des mélanges de ceux-ci.

7. Méthode selon la revendication 6, comprenant moins de 50% en volume d'oxygène, de dioxyde de carbone ou d'un mélange de ceux-ci.

8. Méthode selon la revendication 6, comprenant moins de 30% en volume d'oxygène, de dioxyde de carbone ou d'un mélange de ceux-ci.

9. Méthode selon la revendication 6, comprenant moins de 20% en volume d'oxygène, de dioxyde de carbone ou d'un mélange de ceux-ci.

10. Méthode selon la revendication 6, comprenant moins de 10% en volume d'oxygène, de dioxyde de carbone ou d'un mélange de ceux-ci.

11. Méthode selon l'une des revendications 1 à 10, dans laquelle le mélange gazeux ou l'élément du mélange gazeux comprend de 90% à 99% en volume d'argon et de 1% à 10% en volume de Xe et/ou de Kr.

12. Méthode selon l'une des revendications 1 à 11, dans laquelle le mélange gazeux ou l'élément du mélange gazeux comprend environ 50% en volume de Ne et 50% en volume de He.

13. Méthode selon l'une des revendications 1 à 12, dans laquelle le mélange gazeux ou l'élément du mélange gazeux comprend environ 5% à 10% en volume de Xe et 90% à 95% en volume de Kr.

14. Méthode selon la revendication 13, dans laquelle le mélange gazeux comprend moins de 2% en volume d'argon, d'oxygène, d'azote ou d'un mélange de ceux-ci.

15. Méthode selon l'une des revendications 1 à 14, dans laquelle la température est comprise entre 0°C et 40°C.

16. Méthode selon l'une des revendications 1 à 15, dans laquelle la température est comprise entre 10°C et 30°C.

17. Méthode selon l'une des revendications 1 à 16, dans laquelle la pression du vin ou du précurseur est inférieure à 1 000 kPa (10 atmosphères).

18. Méthode selon l'une des revendications 1 à 17, dans laquelle la pression du vin ou du précurseur est inférieure à 300 kPa (3 atmosphères).

19. Méthode selon l'une des revendications 1 à 17, dans laquelle la pression du vin ou du précurseur est comprise entre 100 et 200 kPa (1 et 2 atmosphères).

20. Méthode selon l'une des revendications 1 à 19, dans laquelle la pression du vin ou du précurseur est d'environ 100 kPa (1 atmosphère).

FIG._1